Europäisches Patentamt

European Patent Office

Office européen des brevets

(19)

(11) Numéro de publication : **0 031 281 B1**

# FASCICULE DE BREVET EUROPÉEN

(12)

(45) Date de publication du fascicule du brevet :
04.07.84

(51) Int. Cl.³ : **G 02 F 1/35**

(21) Numéro de dépôt : **80401804.2**

(22) Date de dépôt : **16.12.80**

(54) **Utilisation de cristaux de 3-méthyl-4-nitropyridine-1-oxyde et de 3,5 diméthyl-4-nitropyridine-1-oxyde en optique non linéaire.**

(30) Priorité : **21.12.79 FR 7931455**

(43) Date de publication de la demande :
**01.07.81 Bulletin 81/26**

(45) Mention de la délivrance du brevet :
**04.07.84 Bulletin 84/27**

(84) Etats contractants désignés :
**DE GB NL**

(56) Documents cités :
**US-A- 3 858 124**
**ACTA CRYSTALLOGRAPHICA, vol. B33, 1977 Norre Sogade (DK) M. SHIRO et al.: "The crystal and molecular structures of 3-methyl-4-nitropyridine N-oxide and 3,5-dimethyl-4-nitropyridine-N-oxide" pages 1549-1556**
**OPTICS AND SPECTROSCOPY, vol. 32 no. 1, janvier 1972 Washington (US) B.L. DAVYDOV et al.: "Second harmonic generation of ruby laser radiation by organic crystals", pages 118-119**
**OPTICS AND SPECTROSCOPY, vol. 34, no. 2, février 1973 Washington (US) B.L. DAVYDOV et al.: "Nature of the absorption bands and the origin of the high nonlinear dielectric susceptibility of molecular crystals", pages 150-153**
**SOVIET JOURNAL OF QUANTUM ELECTRONICS, vol 7, no. 7, janvier 1977 New York (US) B.L. DAVYDOV et al.: "New nonlinear organic materials for generation of the second harmonic of neoclymium laser radiation", pages 129-131**

(73) Titulaire : **Chemla, Daniel**
**50, Avenue Jean Jaurès**
**F-92290 Châtenay-Malabry (FR)**

**Zyss, Joseph**
**58, rue Desaix**
**F-75015 Paris (FR)**

**Nicoud, Jean-François**
**Residence F. Leroux Rue F. Leroux**
**F-91400-Orsay (FR)**

(72) Inventeur : **Chemla, Daniel**
**50, Avenue Jean Jaurès**
**F-92290 Châtenay-Malabry (FR)**
Inventeur : **Zyss, Joseph**
**58, rue Desaix**
**F-75015 Paris (FR)**
Inventeur : **Nicoud, Jean-François**
**Residence F. Leroux Rue F. Leroux**
**F-91400-Orsay (FR)**

(74) Mandataire : **Mongrédien, André et al**
**c/o BREVATOME 25, rue de Ponthieu**
**F-75008 Paris (FR)**

EP 0 031 281 B1

## Description

La présente invention a pour objet une utilisation de cristaux moléculaires en optique non linéaire. Par ce terme, on entend le domaine de l'optique qui s'étend de la conversion de fréquences optiques (obtention d'un rayonnement optique à partir de deux rayonnements de fréquences différentes, la fréquence du rayonnement de conversion étant égale à la somme ou à la différence des fréquences des deux autres) à la modulation électrooptique (modification d'une des caractéristiques d'un rayonnement par application d'un champ électrique à un cristal traversé par ledit rayonnement).

On connaît déjà de nombreux matériaux susceptibles de convenir à la conversion de fréquences optiques ou à la modulation électrooptique. On peut citer, par exemple, pour les cristaux doubleurs de fréquences et pour les cristaux électrooptiques, le KDP (diphosphate de potassium) ou le niobate de lithium.

Ces matériaux souffrent d'un inconvénient qui est leur manque d'efficacité, ce qui oblige à les employer sous de fortes épaisseurs. L'invention a justement pour objet des matériaux dont l'efficacité est améliorée.

A cette fin, l'invention propose d'utiliser des cristaux de 3-méthyl-4-nitropyridine-1-oxyde ou de 3,5-diméthyl-4-nitropyridine-1-oxyde.

Les demandeurs pensent pouvoir expliquer l'efficacité remarquable de ces corps de la manière suivante. Les cristaux convertisseurs de fréquences doivent satisfaire à deux conditions :

1) être formés d'unités microscopiques présentant de fortes non-linéarités optiques.

2) avoir des structures cristallines telles que les contributions microscopiques s'ajoutent constructivement.

Dans l'art antérieur, la condition (1) est remplie par des corps dont les unités microscopiques présentent des dipôles électriques permanents élevés. Cependant, l'existence même de ces dipôles fait apparaître des forces qui favorisent les structures cristallines dans lesquelles les dipôles permanents s'opposent, ce qui nuit à l'alignement des unités microscopiques. D'où des compensations qui affaiblissent les non-linéarités macroscopiques du cristal. Avec les matériaux de l'art antérieur, les conditions (1) et (2) ne sont donc pas satisfaites simultanément.

Les inventeurs ont découvert que la 4-nitropyridine-1-oxyde (et ses substitués) présente une non-linéarité très élevée et simultanément un dipôle permanent très faible. Pour cette molécule, en effet, le dipôle créé par les électrons $\pi$ (électrons qui gouvernent la non-linéarité de la molécule) est opposé au dipôle créé par les électrons $\sigma$, avec une amplitude analogue, de sorte que le dipôle total de la molécule est très faible alors que la non-linéarité est élevée. La 4-nitropyridine-1-oxyde cristallise dans une structure centrée qui ne présente pas d'effet non linéaire macroscopique. Il est cependant possible de modifier très légèrement cette molécule, sans perturber ses propriétés électroniques, pour obtenir des composés cristallisant dans des structures non centrées et telles que les non-linéarités microscopiques s'ajoutent efficacement. Ainsi, les effets stériques induits par un radical méthyl placé en position 3 et/ou 5 suffisent à empêcher la centrosymétrie cristalline.

L'invention porte donc sur l'utilisation de cristaux de 3-méthyl-4-nitropyridine-1-oxyde et de 3,5-diméthyl-4-nitropyridine-1-oxyde en optique non linéaire et dans tous les dispositifs utilisant les effets optiques non linéaires.

En ce qui concerne les procédés d'obtention des cristaux tels qu'utilisés selon l'invention et les méthodes d'analyse et de caractérisation des corps obtenus, on pourra se reporter à :

— l'article de MASUMI YAMAKAWA et al. intitulé « Absorption and phosphorescence spectra of 4-nitropyridine-N-oxides and 4- and 3-nitroquinoline-N-oxides » publié dans la revue « Spectrochimica Acta », vol. 30, p. 2103-2119, 1974, et à

— l'article de MOTOO SHIRO et al. intitulé « The crystal and Molecular Structures of 3-methyl-4-nitropyridine-N-oxide and 3-5-dimethyl-4-nitropyridine-N-oxide » publié dans la revue « Acta crystallographica » B 33, 1977, 1549-1556.

## Revendication

Utilisation de cristaux moléculaires de 3 ou 5-méthyl-4-nitropyridine-1-oxyde ou de 3,5-diméthyl-4-nitropyridine-1-oxyde en optique non linéaire.

## Claim

The use of molecular crystals of 3- or 5-methyl-4-nitropyridine-1-oxide or 3,5-dimethyl-4-nitropyridine-1-oxide in non-linear optics.

## Anspruch

Verwendung von molekularen Kristallen von 3- oder 5-Methyl-4-nitropyridin-1-oxid oder 3,5-Dimethyl-4-nitropyridin-1-oxid in der nicht-linearen Optik.